# EUROPÄISCHE PATENTANMELDUNG

(11) **EP 4 628 297 A1**
(43) Veröffentlichungstag der Anmeldung: **08.10.2025**
(21) Anmeldenummer: 25162544.8
(22) Anmeldetag: 10.03.2025
(51) Int. Cl.: B32B 5/02, B32B 5/20, B32B 7/12, B32B 25/08, B32B 27/08, B32B 27/18, B32B 27/20, B32B 27/32

(54) **MEHRSCHICHTVERBUND**

(30) Priorität: 05.04.2024 DE 102024203141
(71) Anmelder: Benecke Kaliko AG, 30419 Hannover (DE)
(72) Erfinder: Knecht, Matthias, 74679 Weissbach (DE); Wagner, Klaus, 74679 Weissbach (DE); Dr. Wittmann, Gabriele, 74679 Weissbach (DE)
(74) Vertreter: Preusser, Andrea

(57) **Zusammenfassung**

Die Erfindung betrifft einen Mehrschichtverbund aufweisend mindestens eine ein oder mehrlagige Trägerschicht und mindestens eine ein- oder mehrlagige funktionelle Schicht, wobei die Trägerschicht mindestens ein thermoplastisches Polyolefin umfasst und wobei die funktionelle Schicht mehr als 50 Gew.% eines Styrol Blockcopolymers bezogen auf das Gesamtgewicht der funktionellen Schicht umfasst. Außerdem betrifft die Erfindung Sitzmöbel aufweisend einen Bezug aus einem derartigen Mehrschichtverbund.

Die Erfindung betrifft einen Mehrschichtverbund aufweisend mindestens eine ein oder mehrlagige Trägerschicht und mindestens eine ein- oder mehrlagige funktionelle Schicht, wobei die Trägerschicht mindestens ein thermoplastisches Polyolefin umfasst und wobei die funktionelle Schicht mehr als 50 Gew.% eines Styrol Blockcopolymers bezogen auf das Gesamtgewicht der funktionellen Schicht umfasst. Außerdem betrifft die Erfindung Sitzmöbel aufweisend einen Bezug aus einem derartigen Mehrschichtverbund.

## Beschreibung

Die Erfindung betrifft einen Mehrschichtverbund, insbesondere Kunstleder, aufweisend mindestens eine ein- oder mehrlagige Trägerschicht und mindestens eine ein- oder mehrlagige funktionelle Schicht. Außerdem betrifft die Erfindung Sitzmöbel aufweisend einen Bezug aus einem solchen Mehrschichtverbund.

Insbesondere im Automobilbereich und Möbel- und Objektbereich basieren heutige Kunstleder zum größten Teil auf PVC, Polyurethan und Polyolefinen. Für den Sitzbereich haben sich neben Leder, PVC sowie PUR Kunstleder bewährt da sie die hohen Ansprüche an Abriebe und Kratzbeanspruchung erfüllen. Kunstleder basierend auf Polyolefinen halten jedoch diesen hohen Beanspruchungen nicht Stand und werden stattdessen für Bauteile wie Instrumententafeln, Türseiten und anderen Anbauteilen verwendet, bei denen eine geringere mechanische Beanspruchung nötig ist, jedoch eine z.B. hohe UV-Beanspruchung erforderlich ist. PVC Kunstleder werden auch im Möbelbereich wegen ihren sehr guten flammhemmenden Eigenschaften eingesetzt. Bei den typischen Kunstledern werden Textilien auf Basis von Baumwolle, Polyester, Polyamid, Polypropylen eingesetzt.

PVC hat eine hohe Dichte (ca. 1.4 g/cm³) und dadurch auch ein hohes Gewicht. Um Konstruktionen aus PVC weich und flexibel zu machen, sind Weichmacher nötig. Die Weichmacher wiederrum führen aufgrund der Migration der kurzkettigen Moleküle zu einer Versprödung des Materials. PUR hat ebenfalls eine hohe Dichte (ca. 1.1 - 1.2 g/cm³) und benötigt zur Herstellung gesundheitlich bedenkliche Chemikalien (z.B. Isocyanate). Kunstleder aus PUR sind normalerweise vernetzt und dann nicht mehr frei prägbar. Neben dem unangenehmen Geruch von PVC und PUR-Kunstleder sind die hohen Emissionen und der Halogengehalt außerdem aus Umweltgründen nachteilig.

Polyolefin Kunstleder hat hingegen eine sehr niedrige Abriebfestigkeit und ist haptisch im Vergleich mit PVC oder PUR zu hart. Weiterhin sind Konstruktion aus thermoplastische Polyolefine (TPO) sehr knitteranfällig, sodass sich bei der Verarbeitung sichtbare bleibende Falten/Knicke ausbilden.

Bei allen Kunstleder Konstruktionen ist das Recycling sehr aufwendig oder zum Teil nicht möglich. Die funktionelle Beschichtung und textile Träger bestehen üblicherweise aus unterschiedlichen Materialien, z.B. PVC-Kunstleder und Polyester-Textil. Die funktionelle Beschichtung lässt sich außerdem nur unter großem Aufwand bzw. überhaupt nicht von dem Träger trennen. Aufwendiges Trennen von Beschichtung und Träger generiert zusätzlich unnötige Kosten. Oftmals werden die Konstruktionen deshalb nicht recycelt, sondern verbrannt und somit zu der ohnehin hohen CO₂-Emission beigetragen.

Im Möbelbereich sind zum Teil sehr strenge flammhemmende Anforderungen gesetzt. Üblicherweise wird denen heutzutage mit speziell ausgerüsteten Baumwollträgern begegnet. Diese werden wiederum überwiegend mit einer Beschichtung auf PVC oder PUR Basis kombiniert.

EP 3233483 B1 offenbart eine Verbundfolie, insbesondere für Verkleidungen von Fahrzeuginnenräumen, mit einer Dekorfolie, die ein thermoplastisches Styrol-Blockcopolymer und ein thermoplastisches Homo- oder Copolymer von Propylen enthält. Diese Verbundfolie zeichnet sich durch eine hohe Kratz- und Abriebbeständigkeit aus.

Aufbauend auf den Erkenntnissen aus EP 3233483 B1 war es die Aufgabe der vorliegenden Erfindung einen Mehrschichtverbund zu entwickeln, welcher die speziellen Anforderungen für die Verwendung als Bezug auf Sitzmöbeln erfüllt und gleichzeitig Vorteile in Bezug auf die Nachhaltigkeit des Produkts aufweist. Insbesondere soll ein Mehrschichtverbund entwickelt werden, der eine verbesserte Abriebbeständigkeit bei gleichzeitig angenehmer und weicher Haptik der Oberfläche aufweist.

Diese Aufgabe wird durch einen Mehrschichtverbund gelöst, der mindestens eine ein- oder mehrlagige Trägerschicht und mindestens eine ein- oder mehrlagige funktionelle Schicht aufweist, wobei die Trägerschicht mindestens ein thermoplastisches Polyolefin umfasst und wobei die funktionelle Schicht mehr als 50 Gew.%, insbesondere mehr als 60 Gew.-%, eines Styrol Blockcopolymers (SBC) bezogen auf das Gesamtgewicht der funktionellen Schicht umfasst. Um eine ausreichende Abriebbeständigkeit zu erreichen und so die Eignung für Sitzanwendungen zu schaffen, muss der SBC-Anteil der funktionellen Schicht über 50 Gew.-%, bezogen auf das Gesamtgewicht der funktionellen Schicht, liegen. Ein solcher Mehrschichtverbund ist allein aufgrund der Weichheit, Haptik und Flexibilität bei gleichzeitig hoher Abriebbeständigkeit besonders gut für die Verwendung als Kunstlederbezug in Sitzanwendungen, z.B. Sitzmöbeln, geeignet. Zusätzlich vorteilhaft ist die polyolefinischen Basis, die durch ihre geringe Dichte (ca. 0.9 -1.0 g/cm³) abriebfeste Leichtbaukonstruktionen ermöglicht.

In vorteilhaften Ausführungsformen wird das Styrol Bockcopolymer (SBC) ausgewählt aus der Liste bestehend aus Styrol-Butadien-Styrol-Blockcopolymer (SBS), Styrol-Isopren-Styrol-Blockcopolymer (SIS), Styrol-Ethylen-Butylen-Styrol-Blockcopolymer (SEBS), Styrol-Ethylen-Ethylen-Propylen-Styrol Blockcopolymer (SEEPS), Styrol-Ethylen-Propylen-Styrol-Blockcopolymer (SEPS) und Mischungen daraus. Diese SBCs eignen sich besonders gut, da diese untereinander kompatibel sind und eine sehr gute Rückstellfähigkeit (Hysterese) aufweisen. Bei dem erfindungsgemäß hohen Anteil an SBCs ist dadurch eine weichere und somit angenehmere Haptik zu erreichen. Zusätzlich äußert sich das auch bei dem reduzierten oder sogar fehlendem "knacken" bei der mechanischen Verarbeitung des Mehrschichtsverbunds, z.B. beim Walken eines aus dem Mehrschichtverbund gebildeten Kunstleders.

Grundsätzlich ist die Materialhärte eines erfindungsgemäßen Mehrschichtverbunds nicht beschränkt. In vorteilhaften Ausführungsformen, insbesondere zur Verwendung des Mehrschichtverbunds als Kunstleder, sind Materialhärten der eingesetzten Polymere im Bereich von 20 bis 80 Shore A (nach DIN ISO 7619-1) geeignet. Eine angenehme Haptik, d.h. Weichheit oder ausreichend geringe Härte, ist bei Werten unterhalb von 60 Shore A (nach DIN ISO 7619-1) zu erreichen.

Die funktionelle Schicht umfasst mehr als 50 Gew.% mindestens eines Styrol Blockcopolymers (SBC) bezogen auf das Gesamtgewicht der funktionellen Schicht. Je höher der Anteil der SBCs desto besser ist auch die Rückstellfähigkeit (Hysterese) des Materials. Im Hinblick auf eine optimierte Knickbeständigkeit umfasst der SBC-Anteil von mehr als 60 Gew.-%, insbesondere von 65 bis 90 Gew.-%, jeweils bezogen auf das Gesamtgewicht der funktionellen Schicht. In dem Zusammenhang ist überraschenderweise festgestellt worden, dass der amorphe Polymeranteil in der Rezeptur maximiert werden muss, um auch die Knitterbeständigkeit zu verbessern.

In vorteilhaften Ausführungsformen umfasst die funktionelle Schicht mindestens zwei Styrol Blockcopolymere (SBCs), die sich mindestens im Molekulargewicht unterscheiden. Beispielsweise haben die SBCs ein Molekulargewicht von mindestens 50 000 Da. Die Differenz der Molekulargewichte zwischen zwei SBCs beträgt mindestens 10 000 Da, vorzugsweise mindestens 20 000 Da, weiter bevorzugt mindestens 30 000 Da. Bei den angegebenen Werten handelt es sich um Massenmittel der Molmasse (Mw), die über die Hochtemperatur-Gelpermeationschromatographie (HT-GPC) bestimmt werden können.

Vorzugsweise weist ein SBC eine Härte von 20 bis 80 Shore A auf und ein weiteres SBC eine Härte von mehr als 80 Shore A, jeweils gemessen nach DIN ISO 7619-1. Derartige Mischungen bilden Morphologien, die sich positiv auf die Abriebeigenschaften auswirken, d.h. den Abrieb des Materials reduzieren. Im Gegensatz zu einem Kunstleder basierend auf TPO kann so der Abrieb deutlich verbessert und für eine Sitzanwendung optimiert werden.

In besonders vorteilhaften Ausführungsformen umfasst die funktionelle Schicht 60 bis 90 Gew.-% SBC, insbesondere 60 bis 80 Gew.-%, bezogen auf das Gesamtgewicht der funktionellen Schicht. Ergänzend kann die funktionelle Schicht in dieser Ausführungsform mindestens zwei Styrol Blockcopolymere (SBCs) umfassen, die sich mindestens in der Glasübergangstemperatur (T_{G}) unterscheiden. Vorzugsweise weisen die mindestens zwei SBCs einen T_{G}s im Bereich von T_{G} -60°C bis 30°C. Vorzugsweise beträgt der Tg mindestens eines der zwei SBCs von 0 bis 20°C und der jeweils andere -50 bis -10°C (bestimmt mittels DMA). Auf diese Art kann die funktionelle Schicht hinsichtlich der Flexibilität und Knickbeständigkeit verbessert werden. Zusätzlich sind derartige Konstruktionen besonders versprödungsarm.

Die funktionelle Schicht umfasst vorzugsweise keine niedermolekularen Bestandteile zur Verwendung als Weichmacher wie z.B. Mineralöle. Damit kann keine Migration aus der Schicht stattfinden und einer Versprödung des Materials zusätzlich entgegengewirkt werden.

In vorteilhaften Ausführungsformen ist die funktionelle Schicht eines erfindungsgemäßen Mehrschichtverbunds als Kompaktschicht ausgebildet. Die Kompaktschicht zeichnet sich gegenüber einer geschäumten Schicht vorzugsweise dadurch aus, dass sie die erforderliche Temperaturstabilität sowohl für den Herstellungsprozess als auch für die Nutzung der Verbundfolie des Bauteils mit angestrebter Weichheit besitzt. Auch lässt sich die erfindungsgemäße Verbundfolie zweckmäßig auf ein textiles Flächengebilde, z.B. einen Textilträger, laminieren. Gerade in diesem Fall ist sie, insbesondere genarbt, zur Verwendung als Kunstleder für den Automobil- oder Modebereich geeignet. Zudem kann die funktionelle Kompaktschicht vor der Laminierung mit einem Teil einer weiteren kompakten oder geschäumten Schicht laminiert werden. Schließlich kann die zweilagige kompakte Verbundfolie zu einem gesamten Verbundgebilde extrudiert werden. Die grundsätzlichen Herstellungsverfahren der Verbundgebilde sind der fachkundigen Person bekannt und bedürfen keiner weiteren Ausführung. Derartige Kompaktfolien weisen den Vorteil auf, geometrisch komplexere Bauteile z.B. im Thermoformierverfahren mit Verstreckungsgraden von > 80% zu erzeugen.

Grundsätzlich bestehen bei der Ausbildung der Trägerschicht vielfältige Möglichkeiten.

In vorteilhaften Ausführungsformen umfasst das thermoplastische Polyolefin der Trägerschicht ein Polypropylen (homo oder random Copolymer), ein Polyethylen oder eine Mischung aus einer Polypropylen-Matrix und Ethylen-Propylen Kautschuk. Hierbei können auch Mischungen der genannten Polymere eingesetzt werden. Polypropylen ist günstig und einfach in der Verarbeitung. Deswegen basiert die Trägerschicht in besonders bevorzugten Ausführungsformen auf einem homo oder random Copolymer von Polypropylen.

Die Trägerschicht kann als eine Schaumschicht oder als eine kompakte Textilschicht ausgebildet sein. In Ausführungsformen, in denen die Trägerschicht als kompakte Textilschicht ausgebildet ist, wird die Kompaktfolie mit geringer Dichte thermisch und/oder durch Verkleben mit der beschriebenen funktionellen Schicht verbunden werden. Solche Kompaktfolien können eine Dichte von mehr als 800 kg/m3 aufweisen und weniger als 1100 kg/m3, vorzugsweise von 800 bis 1000 g/m3. Die Dichte kann nach der Norm DIN EN ISO 1183-1 bestimmt werden. Vorteilhafterweise ist auch der Klebstoff polyolefinbasiert. Das trägt dazu bei, dass der gesamte Mehrschichtverbund thermisch mechanisch recycelt werden kann. Die als Schaumschicht ausgebildete Trägerschicht hat den Vorteil, dass kein Haftmittel (oder Klebstoff) eingesetzt werden muss. Geschäumte polyolefinbasierte Flächengebilde mit Dichten von 40 bis 800 kg/m³ sind in dem Zusammenhang bevorzugt.

Der erfindungsgemäße Mehrschichtverbund weist eine Trägerschicht und mindestens eine funktionelle Schicht auf. Alle Schichten können ein- oder mehrlagig ausgebildet sein. In vorteilhaften Ausführungsformen ist die funktionelle Schicht vollständig auf einer Trägerschicht ausgebildet. Auf der nicht von der Trägerschicht bedeckten Seite, weist die funktionelle Schicht vorzugsweise eine Lackschicht auf. Bei Verwendung des Mehrschichtverbunds als Kunstleder (z.B. für Sitzmöbel oder Modeartikel) bildet die von der Lackschicht bedeckte Seite der funktionellen Schicht die sichtbare Seite des Mehrschichtverbunds. Vorzugsweise ist die funktionelle Schicht auf der sichtbaren Seite vollständig mit einer ein- oder mehrlagigen Lackschicht bedeckt. Dadurch kann der Glanzgrad und die Haptik des Materials eingestellt werden ein zusätzlicher mechanischer und/oder chemischer Schutz für die funktionelle Schicht bereitgestellt werden.

Die Lacke der Lackschicht können ein Polymer ausgewählt aus der Gruppe bestehend aus Polyurethan, Polyacrylat, Polysiloxan, Polyester, Polyether oder Copolymere davon umfassen. Die ein- oder mehrlagig ausgebildete Lackschicht kann lösungsmittelbasiert oder wasserbasiert sein. Ein Lösungsmittel im Kontext der Erfindung ist ein kurzkettiges organisches Molekül in flüssigem Aggregatzustand. Wasser ist gegenüber Lösungsmitteln im Hinblick auf Gesundheits- und Umweltgefahren bevorzugt. In alternativen Ausführungsformen kann die Lackzusammensetzung auf Lacken basieren, die im Wesentlichen frei von Lösungsmitteln und/oder Wasser sind. Ein solches System besteht im Wesentlichen aus geeigneten Polymeren.

In einigen Ausführungsformen ist der Mehrschichtverbund eine halogenfreie und flammfeste Konstruktion, insbesondere zur Verwendung in Sitzmöbeln (z.B. Autositze). Als flammfest werden Materialien/Konstruktionen bezeichnet, die die Anforderungen der Brandnormen BS IS-1 (20sec), DIN EN 53438, BS 5852 IS-5 erfüllen.

Zur Verbesserung des Flammschutzes kann jeder der Schichten ein Flammschutzmittel hinzugefügt werden. Das Flammschutzmittel wird vorzugsweise ausgewählt aus der Liste bestehend aus Ammoniumpolyphosphat (APP), Piperazinpyrophospat, Aluminiumphosphinate, Produkte aus der Reaktion der Methylphosphonsäure und Diamin, Melaminphosphat, Melamincyanurat, Melamin, Alumiumtrihydrat und Mischungen daraus. Besonders geeignet ist Piperazinpyrophospat, Ammoniumpolyphosphat und Mischungen aus Phosphorverbindungen mit Stickstoffverbindungen (Synergisten). Der Anteil des Flammschutzmittel kann je nach Brandschutzanforderungen von 5% bis 70 Gew.-%, bezogen auf die Gesamtmasse der Schicht, betragen.

Erfindungsgemäß ist der Mehrschichtverbund vollständig mechanisch recyclingfähig und für die Verwendung als Kunstleder (z.B. für Sitzmöbel oder Modeartikel) geeignet. Dies ist dadurch möglich, dass alle eingesetzten Polymertypen gleich oder chemisch ähnlich sind. Dies kann ermöglicht werden, wenn der gesamte Mehrschichtverbund auf Polyolefinen basiert, d.h. weniger als 50 Gew.-%, vorzugsweise weniger als 30 Gew.-%, weiter bevorzugt weniger als 10 Gew.-%, am meisten bevorzugt weniger als 5 Gew.-%, jeweils basierend auf dem Gesamtgewicht des Mehrschichtverbunds, weiterer Polymertypen aufweist. Wichtig ist, dass alle Bestandteile der Konstruktion, d.h. des Mehrschichtverbunds, thermoplastische Eigenschaften aufweisen, um eine bis zu 100% recyclingfähige Konstruktion zu bilden. So müssen die Schichten des Mehrschichtverbunds nicht erst voneinander getrennt werden, um wieder verwertet (recycelt) zu werden. Auf die Art kann der Mehrschichtverbund mechanisch recycelt werden, wodurch ein kostengünstiges, schnelles und einfaches Recycling des Materials möglich ist.

In Ausführungsformen, in denen die Trägerschicht als kompakte Textilschicht ausgebildet ist, wird ein Klebstoff/Haftmittel benötigt, um die kompakte Textilschicht an die funktionelle Schicht zu binden. Diese Klebstoffschicht kann, insbesondere aus recyclinggründen, auf Basis eines Polyolefins sein.

In bevorzugten Ausführungsformen ist der gesamte Mehrschichtverbund halogenfrei, d.h. frei von halogenhaltigen Verbindungen, ausgebildet. Das trägt zusätzlich zur Nachhaltigkeit des Produkts bei, da umweltschädliche Substanzen vermieden werden. Das trägt zu einem außergewöhnlich emissionsarmen (gemäß VDA 278) Produkt bei.

Alle genannten Schichten können ein- oder mehrlagig ausgebildet sein. Die gesamte Schichtdicke eines Mehrschichtverbunds beträgt vorzugsweise nicht weniger als 0,1 mm und nicht mehr als 5 mm. Die funktionelle Schicht hat vorzugsweise eine Gesamtschichtdicke bis zu 0,6 mm. In bevorzugten Ausführungsformen ist die funktionelle Schicht zweilagig ausgebildet. Hierbei unterscheiden sich die beiden Lagen in der Härte und der Art der Polyolefine. Vorzugsweise kann die untere Lage der funktionellen Schicht (z.B. die nicht sichtbare Seite der funktionellen Schicht) die weiche Schicht mit einer Härte zwischen von 20 bis 80 Shore A sein. Die obere Lage der funktionellen Schicht (die sichtbare Seite der funktionellen Schicht) kann die härtere Schicht mit einer Härte von mehr als 60 Shore A sein.

Die Zusammensetzungen der genannten Schichten können weitere Additive umfassen. Sie dienen der genauen Einstellung der Materialeigenschaften auf die Bedürfnisse der jeweiligen Anwendung unter Verbesserung der chemischen, elektrischen und mechanischen Eigenschaften. Dabei kann es sich handeln um Stabilisatoren, wie Antioxidantien, Lichtschutzmittel, Wärmestabilisatoren und Flammschutzmittel, Farbmittel, insbesondere Pigmente, Füllstoffe und/oder Verstärkungsstoffe. Von besonderer Bedeutung sind UV-Lichtschutzmittel, wie beispielsweise Benzotriazol-Derivate. Unter den Antioxidationsmitteln sind sterisch gehinderte Phenolderivate, Lactone, Phosphite und/oder sterisch gehinderte Amine, bedeutsam. Insbesondere umfasst die funktionelle Schicht einen oder mehrere Additive ausgewählt aus der Liste bestehend aus Gleitmittel, Füllstoffe, Stabilisatoren, Phosphit, phenolisches Antioxidants, UV Absorber, Lichtstabilisatoren aus gehinderten Aminen (HALS) und/oder Pigmente.

In bevorzugten Ausführungsformen ist der Mehrschichtverbund ein Kunstleder.

Der Mehrschichtverbund ist geeignet für die Verwendung als z.B. Sitzmöbel, Automobilinnenausstattung, Dachhimmel, Deckenverkleidung, Wandverkleidung, Modeartikel oder Schuhe. Beispielsweise kann der Mehrschichtverbund eine Handtasche, ein Portemonnaie, ein Bekleidungsstück, ein Kissenbezug, ein Sitzkissenbezug, ein Stuhlkissen, ein Stuhlbezug, ein Sesselbezug, ein Sofabezug, ein Bezug für einen Autositz oder ein Bezug für ein Lenkrad sein.

Die Erfindung bezieht sich außerdem auf Sitzmöbel aufweisend einen Bezug aus einem Mehrschichtverbund wie oben beschrieben.

### Beispiele

Die Erfindung wird im Folgenden anhand von Beispielen erläutert. Diese sind als beispielhafte Ausführungsformen zu verstehen und schränken die Erfindung in keiner Weise ein.

Es wurden erfindungsgemäße Mehrschichtverbundstrukturen (A, B, C) hergestellt und mit zwei herkömmlichen Mehrschichtverbundstrukturen (V1, V2) verglichen. Alle Strukturen A, B, C, V1 und V2 weisen eine Trägerschicht auf, die auf einer homo-PP-Rezeptur basiert. Die funktionelle Schicht der Strukturen ist nach den in Tabelle 1 gezeigten Rezepturen zusammengesetzt. Die verwendeten SEBS1 bis SEBS3 unterscheiden sich in der Härte und im Molekulargewicht. SEBS 1 hat eine Shore A Härte von 61, SEBS2 von Shore A 43 und SEBS3 von Shore A 90, wobei SEBS3 ein Molekulargewicht (Massenmittel der Molmasse, Mw) von 275000 Da SEBS1 174000 Da und SEBS2 139000 Da hat. Das Molekulargewicht wurde mithilfe der Hochtemperatur-Gelpermeationschromatographie (HT-GPC), in Trichlorbenzol bei 160°C und einer konventionellen Kalibration mit Polystyrene Standards bestimmt.

Als thermoplastische Polyolefin (TPO) wurde hier ein aus Polypropylen und Ethylen-Propylen Rubber bestehendes Material mit einer Shore D Härte von 30 verwendet. Für die Vergleichsbeispiele wurde ein Polyolefinelastomer (POE) mit einer Shore A Härte 54 und ein Olefincoblockpolymer (OBC) mit einer Shore A Härte von 71 verwendet.

Als Flammschutzmittel (FR) wurden ein Phosphororganisches Salz (FR1), Aluminiumhydroxid (FR2) und eine Mischung aus Phosphorverbindungen und Stickstoffverbindungen (FR3) ausgewählt. Die angegebenen Mengen sind in Gew.-% und jeweils rückbezogen auf das Gesamtgewicht der verwendeten funktionellen Schicht.

**Tabelle 1: Verwendete Rezepturen**

| | A | B | C | D | E | V1 | V2 | V3 | V4 | V5 |
|---|---|---|---|---|---|---|---|---|---|---|
| SEBS1 | 90 | 80 | 60 | | | | | 90 | 90 | 90 |
| SEBS2 | | | | 60 | 50 | | | | | |
| SEBS3 | | | | | 50 | | | | | |
| POE1 | | | | | | 60 | | | | |
| OBC1 | | | | | | | 60 | | | |
| TPO (PP-EP-Rubber,Shore D 30) | 10 | 20 | 40 | 40 | | 40 | 40 | 10 | 10 | 10 |
| FR1 | - | - | - | - | - | - | - | 35 | | |
| FR 2 | | | | | | | | | 35 | |
| FR 3 | | | | | | | | | | 35 |
| Weitere Additive | 5 | 5 | 5 | 5 | 5 | 5 | 5 | 5 | 5 | 5 |

Die Mehrschichtverbundstrukturen wurden anhand von verschiedenen mechanischen Tests auf ihre Eignung als Sitzmöbel getestet. Tabelle 2 zeigt eine Zusammenfassung dieser Tests. Der Abriebtest wurde in Anlehnung an DIN EN ISO 5470-2:2021 durchgeführt, wobei als Scheuermittel-Gewebe STFI-MD-100 (entsprechend DIN EN ISO 12947-1) eingesetzt wurde. Für die Abriebe wurde eine Tourenzahl von 51.200 Touren festgelegt und es wurde der Gewichtsverlust der Muster bestimmt. Härte-Tests wurden nach EN ISO 868:2003 gemessen. Die Knickbeständigkeit wurde nach DIN EN ISO 32100:2019-02 gemessen, wobei die Proben bei Raumtemperatur gemessen wurden und die Tourenzahl 100.000 betrug. Die Schwerentflammbarkeit wurde nach DIN EN4102-B2 geprüft. Die Auswertung der Knitterbeständigkeit erfolgte nach einem internen Verfahren. Ein Muster einer Folie oder eines Kunstleders wird mit der Hand zu einem Ball zusammengeknüllt und dann flach ausgelegt. Der Mehrschichtverbund bzw. das Kunstleder wird dann nach 15min, 60min und 24h visuell auf die Rückstellung der Falten von "--" bis "++" beurteilt. Am unteren Ende der Skala bedeutet "--", das alle ursprünglich eingefügten Falten erhalten werden und am oberen Ende der Skala bedeutet "++", das keine sichtbare Falte mehr zu erkennen ist.

**Tabelle 2: Ergebnisse aus den mechanischen Tests.**

| | A | B | C | D | E | V1 | V2 | V3 | V4 | V5 |
|---|---|---|---|---|---|---|---|---|---|---|
| Abrieb / mg | 1 | 1 | 88 | 81 | 0 | 182 | 237 | 291 | 1 | 1 |
| Härte / Shore A | 63 | 65 | 72 | 63 | 70 | 66 | 74 | - | - | - |
| Knitterbeständigkeit | ++ | ++ | - | - | + | - | - | | | |
| Flächenbeflammung | F3 | - | - | - | - | - | - | F1 | F2 | F1 |
| Kantenbeflammung | K3 | - | - | - | - | - | - | K3 | K3 | K1 |
| Knickbeständigkeit RT/100k | i.O. | i.O. | i.O. | i.O. | i.O. | i.O. | i.O. | n.I.O. | i.O. | i.O. |

Der Tabelle ist zu entnehmen, dass mit steigendem SBC-Anteil der Abrieb und die Härte abnehmen. Außerdem zeigen die olefinbasierten Rezepturen V1 und V2 im Vergleich mit B und C einen deutlich höheren Abrieb und Knitteranfälligkeit bei ähnlicher Shore A Härte. C fühlt sich sehr hart an und ist knitteranfällig. Daher ist Probe B der beste Kompromiss aus Weichheit und mechanischer Festigkeit. Für die Schwerentflammbarkeit stellte sich heraus das FR3 am geeignetsten für die Anwendung ist, da der Zusatz von FR3 sich nicht negativ auf die mechanischen Eigenschaften auswirkt und zudem die Schwerentflammbarkeit gewährt.

Zusätzlich wurden Versuche zur Recyclingfähigkeit durchgeführt. Ein erfindungsgemäßer Mehrschichtverbund wurde mechanisch zerkleinert und auf einem Walzwerk bei 180°C eingeschmolzen und zu einer Folie (z.B. zur Verwendung als funktionelle Schicht in einem erfindungsgemäßen Mehrschichtverbund) verarbeitet. Die hergestellte Folie unterscheidet sich leicht in den mechanischen Werten, z.B.Zugfestigkeit, Shore A Härte, von einer Folie, die aus neu erworbenen Rohstoffen erhältlich wäre. Unter anderem steigt die Härte und die Zugfestigkeit reduziert sich. Dieser Effekt ist darauf zurückzuführen, dass beim Einschmelzen auch das PP aus dem Mehrschichtverbund aufgeschmolzen wird und im entsprechenden Anteil in der Folienmischung eingearbeitet wird. Nichtsdestotrotz lässt sich die aus dem recycelten Material hergestellte Folie auch für andere Verwendungen nutzen.

## Patentansprüche

1. Mehrschichtverbund aufweisend mindestens eine ein- oder mehrlagige Trägerschicht und mindestens eine ein- oder mehrlagige funktionelle Schicht, wobei die Trägerschicht mindestens ein thermoplastisches Polyolefin umfasst und wobei die funktionelle Schicht mehr als 50 Gew.% eines Styrol Blockcopolymers bezogen auf das Gesamtgewicht der funktionellen Schicht umfasst.

2. Mehrschichtverbund nach Anspruch 1, wobei das Styrol Blockcopolymer ausgewählt wird aus der Liste bestehend aus Styrol-Butadien-Styrol-Blockcopolymer (SBS), Styrol-Isopren-Styrol-Blockcopolymer (SIS), Styrol-Ethylen-Butylen-Styrol-Blockcopolymer (SEBS), Styrol-Ethylen-Ethylen-Propylen-Styrol Blockcopolymer (SEEPS), Styrol-Ethylen-Propylen-Styrol-Blockcopolymer (SEPS) und Mischungen daraus.

3. Mehrschichtverbund nach einem der Ansprüche 1 oder 2, wobei die Trägerschicht eine Schaumschicht oder eine kompakte Textilschicht ist und das thermoplastische Polyolefin ein Polypropylen ist.

4. Mehrschichtverbund nach einem der Ansprüche 1 bis 3, wobei die Trägerschicht und die funktionelle Schicht durch eine Klebstoffschicht verbunden sind.

5. Mehrschichtverbund nach Anspruch 4, wobei die Klebstoffschicht auf Basis eines Polyolefins ist.

6. Mehrschichtverbund nach einem der Ansprüche 1 bis 5, wobei der gesamte Mehrschichtverbund halogenfrei ist.

7. Mehrschichtverbund nach einem der Ansprüche 1 bis 6, wobei die funktionelle Schicht eine Kompaktschicht ist.

8. Mehrschichtverbund nach einem der Ansprüche 1 bis 7, wobei die funktionelle Schicht eine sichtbare Seite aufweist und die sichtbare Seite mit einer ein- oder mehrlagigen Lackschicht vollständig bedeckt ist.

9. Mehrschichtverbund nach Anspruch 8, wobei die ein- oder mehrlagige Lackschicht auf einem Polymer basiert, der ausgewählt wird aus der Liste bestehend aus Polyurethan, Polyacrylat, Polysiloxan, Polyester, Polyether oder Copolymere davon.

10. Mehrschichtverbund nach einem der Ansprüche 1 bis 9, wobei mindestens eine der Schichten ein Flammschutzmittel umfasst und das Flammschutzmittel ausgewählt wird aus der Liste bestehend aus Piperazinpyrophospat, Ammoniumpolyphosphat und Mischungen aus Phosphorverbindungen mit Stickstoffverbindungen und Mischungen daraus.

11. Mehrschichtverbund nach einem der Ansprüche 1 bis 10, wobei die funktionelle Schicht mehr als 60 Gew.% und weniger als 95 Gew.% eines Styrol Blockcopolymers bezogen auf das Gesamtgewicht der funktionellen Schicht umfasst.

12. Mehrschichtverbund nach einem der Ansprüche 1 bis 11, wobei die funktionelle Schicht mindestens zwei unterschiedliche Styrol Blockcopolymere umfasst, die sich mindestens im Molekulargewicht unterscheiden.

13. Mehrschichtverbund nach Anspruch 12, wobei eines der Styrol Blockcopolymere eine Härte von 20 bis 80 Shore A aufweist und ein zweites Styrol Blockcopolymer eine Härte von mehr als 80 Shore A aufweist.

14. Mehrschichtverbund nach einem der Ansprüche 1 bis 13, wobei der Mehrschichtverbund ein Kunstleder ist.

15. Sitzmöbel aufweisend einen Bezug aus einem Mehrschichtverbund nach einem der Ansprüche 1 bis 14.
